# FASCICULE DE BREVET EUROPEEN

(11) **EP 2 456 032 B1**
(45) Date de publication et mention de la délivrance du brevet: **14.06.2017**
(21) Numéro de dépôt: 11290477.6
(22) Date de dépôt: 17.10.2011
(51) Int. Cl.: H02G 3/18, H02G 11/02, B65H 75/40, B65H 75/44, A47B 21/06

(54) **Dispositif de rangement de câble électrique**
Vorrichtung zum Verstauen von Stromkabeln
Device for storing electric cable

(30) Priorité: 18.11.2010 FR 1004512
(43) Date de publication de la demande: 23.05.2012
(73) Titulaire: Legrand France, 87000 Limoges (FR); Legrand SNC, 87000 Limoges (FR)
(72) Inventeur: Perrignon de Troyes, François, 72100 Le Mans (FR); Jarry, Patrice, 72140 Mont Saint Jean (FR); Buard, Yvon, 53600 Voutre (FR)
(74) Mandataire: Orsini, Fabienne

(56) Documents cités:
- WO-A1-2006/129927
- GB-A- 1 009 324
- US-A- 3 316 361
- US-A- 5 066 247
- US-A1- 2003 192 761
- US-A1- 2009 211 860
- US-B1- 6 346 006

## Description

### DOMAINE TECHNIQUE AUQUEL SE RAPPORTE L'INVENTION

La présente invention concerne de manière générale le domaine des installations électriques.

Elle concerne plus particulièrement une installation électrique telle que définie dans le préambule de la revendication 1.

Elle trouve une application particulièrement avantageuse dans la réalisation d'une installation électrique telle que précitée, dont l'appareillage électrique est formé soit par une prise de courant fixe et accessible à l'utilisateur par l'avant de la paroi, soit par un bloc multiprise mobile en translation pour pouvoir sortir au-dessus de la paroi afin de faciliter l'accès aux puits de ses prises de courant.

### ARRIERE-PLAN TECHNOLOGIQUE

On connaît notamment du document US 2009/0211860 un dispositif de rangement de câble électrique du type précité, qui se présente sous la forme d'un enrouleur manuel de câble USB.

Dans ce document, le socle de l'enrouleur est logé dans un boîtier de forme parallélépipédique, équipé d'éléments mâles et femelles de formes correspondantes qui permettent d'accoupler cet enrouleur avec quatre autres enrouleurs du même type. Il est ainsi possible de construire une matrice comportant plusieurs rangées et plusieurs colonnes d'enrouleurs, ce qui facilite le rangement des câbles USB et évite que ces câbles ne s'emmêlent.

Qu'il soit ou non accouplé à un autre enrouleur du même type, lorsqu'il est utilisé, l'enrouleur est prévu pour être posé au sol ou sur un bureau. Cette position n'est pas satisfaisante puisque l'enrouleur est alors non seulement gênant et encombrant, mais aussi susceptible de recevoir des chocs.

L'enrouleur, qui est alors mobile sur le sol ou sur le bureau, ne facilite par ailleurs pas le branchement des câbles USB puisque cette opération nécessite pour l'utilisateur de tenir avec une main l'enrouleur et de tirer avec l'autre le câble.

On connaît par ailleurs du document US 3 316 361 un enrouleur qui comporte un boîtier en deux parties, dont un socle et un couvercle raccordés ensemble par un axe central, et un câble électrique enroulé autour de l'axe central du boîtier.

On connaît également du document US 6 346 006 un enrouleur de câble qui est équipé d'une fiche électrique à brancher à une prise de courant et d'une platine agencée pour se fixer à la plaque de finition de cette prise de courant.

On connaît aussi du document WO 2006/129927 un boîtier électrique logeant une prise de courant, qui est agencé pour être monté dans une boîte encastrée dans une paroi et qui, lorsque l'accès à cette boîte est entravé par un meuble quelconque situé contre la paroi, peut être tiré à distance de cette paroi.

On connaît enfin du document US 2003/0192761 décrit une installation électrique comportant une plaque de finition et un boîtier qui est fixé à l'arrière de la plaque de finition et qui loge un enrouleur de câble de téléphone.

### OBJET DE L'INVENTION

Afin de remédier aux inconvénients précités de l'état de la technique, la présente invention propose un mécanisme de rangement de câble électrique adapté à être fixé dans un endroit non gênant.

Plus particulièrement, on propose selon l'invention une installation électrique telle que définie dans la revendication 1.

Une fois le dispositif de rangement de câble ainsi fixé, son utilisation est facilitée puisqu'il suffit alors à l'utilisateur de tirer naturellement sur le câble, avec une seule main, pour que ce dernier sorte de son logement.

Le dispositif de rangement de câble n'est en outre plus gênant puisque l'élément de montage (sur lequel il est fixé) est situé à l'arrière de la paroi, hors de la vue de l'usager.

D'autres caractéristiques avantageuses et non limitatives de l'installation électrique conforme à l'invention sont définies dans les revendications 2 et suivantes.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- les figures 1 et 2 sont des vues schématiques en perspective d'un dispositif de rangement de câble selon l'invention, représenté sous deux angles différents ;
- la figure 3 est une vue schématique en perspective assemblée d'un premier mode de réalisation d'une installation électrique selon l'invention, représentée en position engagée dans une ouverture traversante d'une paroi ;
- la figure 4 est une vue schématique en perspective éclatée de l'élément de montage de l'installation électrique de la figure 3 et du dispositif de rangement de la figure 1 ;
- la figure 5 est une vue schématique en perspective assemblée de l'élément de montage de la figure 4 et de deux dispositifs de rangement du type de celui représenté sur la figure 1 ;
- la figure 6 est une vue schématique en perspective partiellement éclatée d'un second mode de réalisation de l'installation électrique selon l'invention, représentée en position engagée dans l'ouverture traversante de la paroi ;
- la figure 7 est une vue schématique en perspective assemblée de l'installation électrique de la figure 6 ;
- les figures 8 et 9 sont des vues schématiques en perspective de deux variantes de réalisation du dispositif de rangement de câble selon l'invention ; et
- la figure 10 est une vue schématique en perspective d'une variante de réalisation de l'élément de montage de l'installation électrique de la figure 6.

En préliminaire on notera que les éléments identiques ou similaires des différentes variantes de réalisation de l'invention représentés sur les différentes figures seront, dans la mesure du possible, référencés par les mêmes signes de référence et ne seront pas décrits à chaque fois.

Dans la description, les termes « avant » et « arrière » seront utilisés par rapport à la direction du regard de l'usager vers la paroi sur laquelle est rapportée l'installation électrique selon l'invention. Par exemple, lorsque la paroi sera une cloison murale d'une pièce, l'avant désignera le côté tourné vers l'intérieur de la pièce et l'arrière désignera le côté tourné vers l'extérieur de la pièce. Lorsque la paroi sera le plateau horizontal d'un bureau, l'avant désignera le côté tourné vers le haut et l'arrière désignera le côté tourné vers le bas.

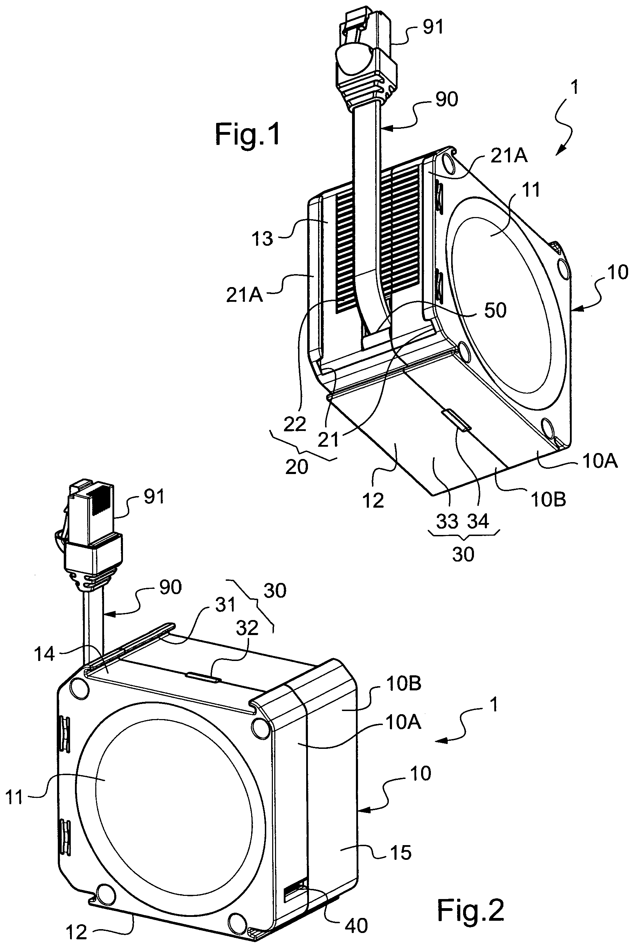

Sur les figures 1 et 2, on a représenté schématiquement un dispositif de rangement 1 d'un câble électrique 90, permettant de faciliter le rangement de ce câble et d'éviter qu'il ne s'accroche à un élément quelconque ou qu'il ne s'emmêle avec d'autres câbles.

Ce dispositif de rangement 1 comporte à cet effet un socle 10 qui délimite intérieurement au moins un logement de réception d'au moins un câble électrique 90. Ici, tel qu'il est représenté sur les figures, le socle 10 de ce dispositif de rangement 1 délimite un unique logement de réception, agencé pour accueillir un seul câble électrique 90.

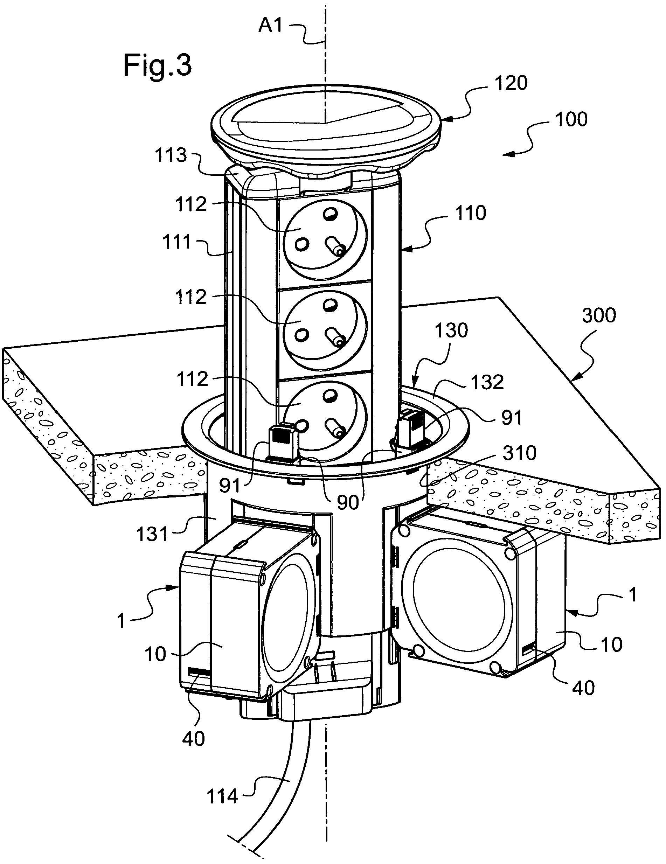

Comme le montrent les figures 3 à 7, ce dispositif de rangement 1 est agencé pour être utilisé conjointement avec une installation électrique 100 ; 200 engagée au travers d'une ouverture traversante 310 pratiquée dans une paroi 300.

Dans les exemples qui seront ici décrits, on considérera que cette paroi 300 est formée par le plateau horizontal d'un bureau sur lequel un appareil électrique (ordinateur portable ou fixe, lampe de bureau, chargeur) peut être posé. Ici, l'appareil électrique considéré sera un ordinateur portable.

L'ouverture traversante 310 pratiquée dans cette paroi 300 est alors du type de celles qu'on trouve couramment sur les bureaux, pour permettre le passage de câbles d'alimentation électrique d'ordinateurs portables. Cette ouverture traversante est généralement circulaire et présente un diamètre compris entre huit et douze centimètres.

Sur les figures 3 à 5 et 6 à 7, on a représenté deux modes de réalisation de l'installation électrique 100 ; 200.

Dans ces deux modes, l'installation électrique 100; 200 comporte un appareillage électrique 110; 210, et un élément de montage 130; 230 de cet appareillage électrique 110 ; 210 dans l'ouverture traversante 310 de la paroi 300.

L'élément de montage 130 ; 230 est, dans ces deux modes, réalisé d'une seule pièce par moulage d'une matière plastique isolante.

Dans le premier mode de réalisation, l'appareillage électrique 110 est monté mobile en translation sur l'élément de montage 130 entre une position rentrée dans cet élément de montage 130 et une position sortie vers l'avant de cet élément de montage 130 (voir figure 3).

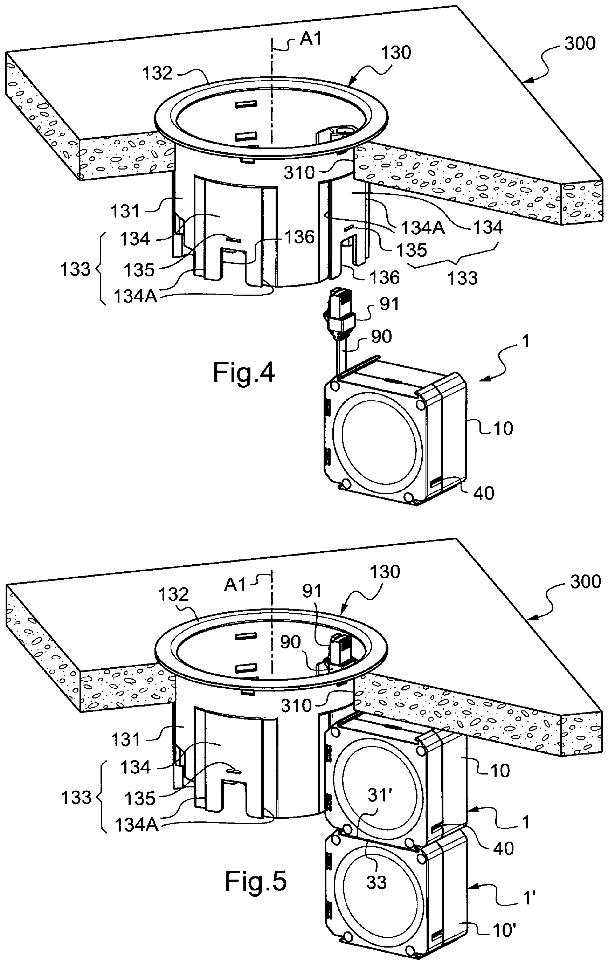

Comme le montre la figure 4, cet élément de montage 130 comporte alors un manchon 131 de forme globalement tubulaire autour d'un axe principal A1 et de diamètre extérieur égal, au jeu près, à celui de l'ouverture traversante 310 pratiquée dans la paroi 300. Ainsi le manchon 131 de l'élément de montage 130 peut-il être inséré dans cette ouverture traversante 310 de telle manière que l'axe principal A1 se retrouve vertical.

Cet élément de montage 130 comporte par ailleurs une couronne 132 qui borde extérieurement l'extrémité avant du manchon 131. Cette couronne 132 est plane et symétrique de révolution autour de l'axe principal A1. Ainsi la couronne 132 est-elle adaptée à reposer sur la face avant de la paroi 300, tout autour de l'ouverture traversante 310, pour bloquer le manchon 131 dans cette ouverture traversante 310.

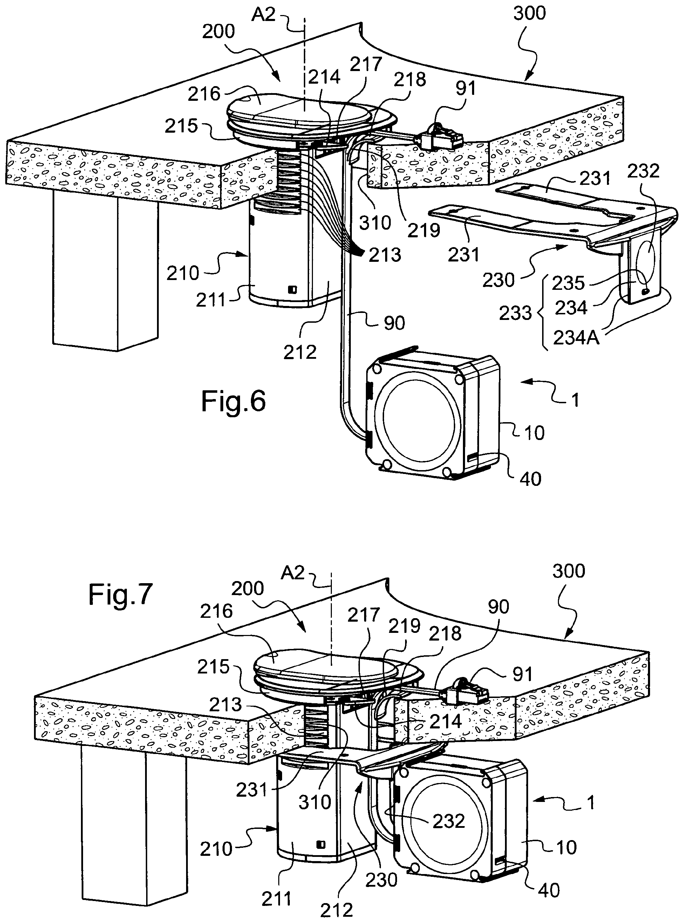

Dans le second mode de réalisation, l'appareillage électrique 210 est au contraire monté fixe par rapport à l'élément de montage 230 et donc par rapport à la paroi 300 (voir figure 7).

Comme le montre la figure 6, il comporte à cet effet un support d'appareillage 211 qui comprend un boîtier 212 allongé selon un axe principal A2, de section globalement carrée et de largeur inférieure à celle de l'ouverture traversante 310 pratiquée dans la paroi 300. Ainsi le boîtier 212 peut-il être inséré dans cette ouverture traversante 310 de telle manière que l'axe principal A2 se retrouve vertical. Ce boîtier 212 est ouvert à l'avant et fermé à l'arrière.

Ce support d'appareillage 211 comporte par ailleurs une couronne 214 qui borde extérieurement l'extrémité avant du boîtier 212. Cette couronne 132 est plane et s'étend dans un plan orthogonal à l'axe principal A2. Ainsi la couronne 214 est-elle adaptée à reposer sur la face avant de la paroi 300, tout autour de l'ouverture traversante 310, pour retenir le boîtier 212 dans cette ouverture traversante 310.

Dans ce mode de réalisation, l'élément de montage 230 est conçu pour bloquer le boîtier 212 dans cette ouverture traversante 310 de telle manière que la couronne 214 reste en appui contre la face avant de la paroi 300.

Cet élément de montage 230 comporte à cet effet un cavalier en forme de U, qui comprend une embase 232 et deux branches 231 s'étendant à partir de cette embase 232.

Les deux branches 231 sont formées par des languettes planes, rectangulaires et souples. Ces deux branches 231 sont coplanaires et parallèles entre elles.

L'embase 232 est principalement formée d'une plaque rectangulaire, repliée à angle droit vers l'arrière des deux branches 231.

Comme le montre la figure 7, le boîtier 212 du support d'appareillage 211 de l'appareillage électrique 210 comporte en correspondance, en creux dans deux côtés opposés de sa face externe, au moins une paire de fentes 213 parallèles dans lesquelles peuvent s'engager les deux branches 231 de l'élément de montage 230.

Ces fentes 213 sont situées dans un même plan orthogonal à l'axe principal A2, de telle sorte qu'en position d'utilisation, les deux branches 231 de l'élément de montage 230 se retrouvent parallèles à la face arrière de la paroi 300. Ces deux branches 231 peuvent ainsi se plaquer contre la face arrière de la paroi 300 afin de bloquer le boîtier 212 en position fixe dans l'ouverture traversante 310.

Ici, il est prévu une pluralité de paires de fentes 213 réparties sur une partie de la longueur du boîtier 212, dans des plans parallèles et équidistants. Ces fentes 213 permettent ainsi de monter l'élément de montage 230 sur le boîtier 212 à une hauteur qui est adaptée à l'épaisseur de la paroi 300.

Le dispositif de rangement 1 représenté sur les figures 1 et 2 est prévu pour être aussi bien utilisé avec l'élément de montage 130 de l'installation électrique 100 représentée sur la figure 3 qu'avec l'élément de montage 230 de l'installation électrique 200 représentée sur la figure 7.

Selon une caractéristique particulièrement avantageuse de l'invention, son socle 10 comporte à cet effet des moyens d'accouplement 20 adaptés à coopérer avec des moyens d'accouplement 133 ; 233 prévus en correspondance sur l'un et l'autre des éléments de montage 130 ; 230.

Tel que représenté sur les figures 1 et 2, le socle est formé par un boîtier 10 parallélépipédique creux. Il est réalisé en deux parties 10A, 10B qui viennent chacune de moulage en matière plastique isolante et qui sont emboîtées et encliquetées l'une sur l'autre.

Ce boîtier 10 loge ici intérieurement des moyens d'enroulement automatique du câble électrique 90 (non visibles sur les figures). Dans la suite de cet exposé, le dispositif de rangement sera donc appelé « enrouleur 1 ». Ses moyens d'enroulement automatique ne faisant pas en propre l'objet de la présente invention, ils ne seront pas ici décrits.

Le boîtier 10 comporte deux faces principales 11 carrées et quatre faces latérales 12, 13, 14, 15 rectangulaires.

Il présente deux ouvertures de sortie de câble 40, 50 qui sont situées sur deux faces latérales opposées. L'une de ces ouvertures de sortie de câble 50 est située sur la face latérale (appelée face intérieure 13) du boîtier 10 qui est prévue pour être tournée vers l'élément de montage 130 ; 230, de manière que le câble électrique 90 puisse être tiré au travers de l'ouverture traversante 310 de la paroi 300. L'autre de ces ouvertures de sortie de câble 50 est située sur la face latérale opposée (appelée face extérieure 15) du boîtier 10, de manière qu'un câble électrique supplémentaire, par ailleurs branché à une prise murale, puisse être introduit dans le boîtier 10 et connecté au câble électrique 90.

Ces ouvertures de sortie de câble 40, 50 présentent ici des formes rectangulaires, adaptées à la section du câble électrique 90 et du câble électrique supplémentaire.

Elles sont décentrées dans la partie basse du boîtier 10. Elles sont ainsi situées au niveau des extrémités des faces intérieure 13 et extérieure 15 qui seront tournées vers l'arrière lorsque l'enrouleur 1 aura été fixé à l'élément de montage 130 ; 230.

Comme le montre la figure 1, les moyens d'accouplement 20 de l'enrouleur 1 sur l'un ou l'autre des éléments de montage 130; 230 des installations électriques 100 ; 200 sont alors prévus sur la face intérieure 13 du boîtier 10.

Ces moyens d'accouplement 20 comportent des moyens de montage à coulissement 21 du boîtier 10 sur l'élément de montage 130 ; 230 suivant un axe parallèle à l'axe principal A1, et des moyens de blocage 22 de ce coulissement.

Les moyens de montage à coulissement prévus sur le boîtier 10 comportent en l'espèce deux nervures 21A qui s'étendent en saillie de la face intérieure 13 du boîtier 10, perpendiculairement à celle-ci, dans le prolongement des deux faces principales 11 du boîtier 10, et dont les bords d'extrémité sont repliés à angle droit en direction l'un de l'autre pour délimiter deux rails en regard.

Ces nervures 21A délimitent ainsi avec la face intérieure 13 du boîtier 10 une coulisse 21.

Les moyens d'accouplement 133 ; 233 prévus en correspondance sur l'élément de montage 130 ; 230 comportent alors un coulisseau 134 ; 234 d'axe parallèle à l'axe A1 ; A2, qui est adapté à coulisser dans cette coulisse 21.

Dans le premier mode de réalisation de l'installation électrique 100 représenté sur les figures 3 à 5, le coulisseau 134 s'étend sur la face externe du manchon 131 de l'élément de montage 130.

Ce coulisseau 134 ne fait pas saillie de la face externe du manchon 131, si bien qu'il ne forme pas obstacle au montage de ce dernier dans l'ouverture traversante 310 de la paroi 300.

Plus précisément, le manchon 131 comporte sur sa face externe un méplat 134 bordé de deux renfoncements 134A d'axes parallèles à l'axe principal A1. Ce méplat 134 et ces renfoncements 134A sont conçus de telle sorte qu'ils présentent ensemble une section transversale à l'axe principal A1 en forme de T pour former ledit coulisseau 134.

Les renfoncements 134A forment ainsi de part et d'autre du méplat 134 deux nervures d'axes parallèles à l'axe A1, sur lesquelles sont adaptés à coulisser les rails délimités par les rainures 21A du boîtier 10 de l'enrouleur 1.

De cette manière, la coulisse 21 prévue sur le boîtier 10 de l'enrouleur 1 peut être engagée sur le coulisseau 134 prévu sur le manchon 131 de l'élément de montage 130, par l'arrière de celui-ci, suivant un axe parallèle à l'axe principal A1.

Tel que représenté sur les figures 3 à 5, le manchon 131 de l'élément de montage 130 comporte deux coulisseaux 134 identiques adaptés à accueillir deux enrouleurs 1, qui sont écartés angulairement de 90 degrés autour de l'axe principal A1.

Dans le second mode de réalisation de l'installation électrique 200 représenté sur les figures 6 et 7, le coulisseau 234 est formé par la partie de l'embase 232 de l'élément de montage 230 qui est repliée à angle droit vers l'arrière.

Cette partie de l'embase 232, en forme de plaque rectangulaire 234, présente à cet effet des dimensions telles que ses tranches longitudinales 234A sont adaptées à coulisser dans les rails délimités par les nervures 21A du boîtier 10.

De cette manière, la coulisse 21 prévue sur le boîtier 10 de l'enrouleur 1 peut être engagée sur l'embase 232 de l'élément de montage 230, par l'arrière de celle-ci, suivant un axe parallèle à l'axe principal A2.

Les moyens de blocage 22 du coulissement de la coulisse 21 prévue sur le boîtier 10 de l'enrouleur 1 le long du coulisseau 134 ; 234 prévu sur l'élément de montage 130 ; 230 sont ici des moyens d'encliquetage.

Comme le montre la figure 1, ces moyens d'encliquetage sont conçus pour pouvoir bloquer le coulissement du boîtier 10 en différentes positions sur l'élément de montage 130 ; 230.

Les moyens d'encliquetage 22 prévus sur le boîtier 10 sont ici situés au fond de la coulisse 21, c'est-à-dire sur la face intérieure 13 du boîtier 10, entre les deux nervures 21A. Ils comportent une série de crans parallèles, qui s'étendent en longueur selon la largueur de la face intérieure 13 et qui s'élèvent en saillie à partir de cette face.

Les moyens d'encliquetage prévus en correspondance sur l'élément de montage 130; 230 comportent quant à eux une simple nervure d'encliquetage 135 ; 235.

Dans le premier mode de réalisation de l'installation électrique 100 représenté sur les figures 3 à 5, la nervure d'encliquetage 135 est formée en saillie de chaque méplat 134 et s'étend en longueur orthogonalement à l'axe principal A1.

De cette manière, la coulisse 21 prévue sur le boîtier 10 de l'enrouleur 1 peut être engagée sur le coulisseau 134 prévu sur le manchon 131 de l'élément de montage 130, puis bloquée dans une position telle que l'une des faces latérales (la face latérale avant 14) du boîtier 10 prenne appui contre la face arrière de la paroi 300, permettant ainsi de bloquer le manchon 131 en position fixe dans l'ouverture traversante 310 de la paroi 300.

Dans cette position, la fiche 91 prévue à l'extrémité du câble électrique 90 qui fait saillie de l'ouverture de sortie de câble 50 peut passer à l'arrière du manchon 131 puis au travers de ce manchon 131 pour être accessible à l'usager à l'avant de la paroi 300.

Sur la figure 4, on observe d'ailleurs qu'il est prévu dans le bord d'extrémité arrière du fut 131 des encoches 136 de passage du câble électrique 90, qui permettent à ce dernier de sortir par l'ouverture de sortie de câble 50 quelle que soit la position de l'enrouleur 1 sur l'élément de montage 130.

Dans le second mode de réalisation de l'installation électrique 200 représenté sur les figures 6 et 7, la nervure d'encliquetage 235 est formée en saillie de la face extérieure de la partie de l'embase 232 qui est repliée à angle droit vers l'arrière. Cette nervure d'encliquetage 235 s'étend en longueur orthogonalement à l'axe principal A2.

De cette manière, la coulisse 21 prévue sur le boîtier 10 de l'enrouleur 1 peut être engagée sur l'embase 232 de l'élément de montage 230, puis bloquée sur celle-ci de telle sorte que le câble électrique 90 puisse passer au travers de l'ouverture traversante 310 de la paroi 300 afin d'être accessible à l'usager à l'avant de la paroi 300.

Ici, comme le montrent les figures 1, 2 et 5, le boîtier 10 de l'enrouleur 1 comporte par ailleurs des moyens d'assemblage 30 pour s'assembler au boîtier 10' d'un autre enrouleur 1' du même type.

Ces moyens d'assemblage comportent des moyens de montage à coulissement 31, 33 des deux boîtiers 10, 10' l'un sur l'autre et des moyens d'encliquetage 32, 34 pour bloquer ce coulissement.

Comme le montrent les figures 1 et 2, les moyens de montage à coulissement comportent en l'espèce, sur la face latérale arrière 12 du boîtier 10, un coulisseau 33 dont la section présente une forme de queue d'aronde, et, sur la face latérale avant 14 du boîtier 10, une coulisse 31 adaptée à coulisser sur le coulisseau du boîtier d'un autre enrouleur.

Ces coulisse 31 et coulisseau 33 sont profilés suivant des axes orthogonaux aux faces principales 11 du boîtier 10. De cette manière, comme le montre la figure 5, lorsqu'un premier enrouleur 1 est fixé sur l'élément de montage 130, il est possible de rapporter un second enrouleur 1' du même type sur celui-ci, en faisant coulisser sa coulisse 31' sur le coulisseau 33 prévu sur le premier enrouleur 1, suivant un axe parallèle à la face arrière de la paroi 300.

Comme le montrent les figures 1 et 2, les moyens d'encliquetage comportent, en saillie de la face latérale avant 14 du boîtier 10, une nervure d'encliquetage 32, et, en creux dans la face latérale arrière 12 du boîtier 10, une rainure d'encliquetage 34 adaptée à loger la nervure d'encliquetage du boîtier d'un autre enrouleur.

Ces nervure d'encliquetage 32 et rainure d'encliquetage 34 s'étendent en longueur suivant des axes parallèles aux faces principales 11 du boîtier 10. Elles sont par ailleurs situées à une même distance des faces principales 11 du boîtier 10. De cette manière, elles sont conçues pour bloquer le coulissement des deux boîtiers 10, 10' l'un par rapport à l'autre lorsque ces derniers sont parfaitement superposés, comme cela est représenté sur la figure 5.

Les appareillages électriques 110 ; 210, qui sont montés dans l'ouverture traversante 310 de la paroi 300 grâce aux éléments de montage 130 ; 230, ne font pas à proprement parler l'objet de la présente invention et seront donc succinctement décrits dans la suite de cet exposé.

Dans le premier mode de réalisation, l'appareillage électrique 110 représenté sur la figure 3 est un bloc multiprise surmonté d'un couvercle 120.

Ce bloc multiprise 110 comporte trois prises de courant 112 portées par un socle 111.

Ce socle 111 est fermé à son extrémité arrière par un premier embout (non visible) duquel fait saillie un câble d'alimentation 114 des prises de courant 112. Il est par ailleurs fermé à son extrémité avant par un second embout 113 qui porte le couvercle 120.

Ce couvercle 120 présente une forme globale de disque épais de diamètre égal, au jeu près, au diamètre intérieur du manchon 131 de l'élément de montage 130. Il permet ainsi de fermer esthétiquement l'ouverture traversante 310 lorsque l'appareillage électrique 110 est en position rentrée.

Ici, le couvercle 120 est monté mobile sur le second embout 113 du socle 111 par des moyens de rotule (non représentés) qui permettent à l'usager de faire basculer le couvercle dans l'ouverture traversante lorsque l'appareillage électrique 110 est en position rentrée afin de pouvoir le saisir plus facilement. Des moyens de rappel (non représentés) sont également prévus pour ramener ce couvercle en position d'obturation de l'ouverture traversante 310.

Le bloc multiprise 110 est monté mobile en translation dans l'élément de montage 130 selon l'axe principal A1 du manchon 131.

Le manchon 131 porte à cet effet deux patins (non visibles sur les figures) qui sont engagés dans des rainures longitudinales prévues sur le socle 111. Ces patins sont ici auto-freinés en ce sens qu'ils sont légèrement comprimés et provoquent un frottement sur le bloc multiprise 110 qui permet à ce dernier, lorsqu'il est placé en position sortie, de rester immobile tant qu'aucun effort n'est exercé sur celui-ci pour le translater vers sa position rentrée.

Des moyens de butée permettent de limiter le débattement du bloc multiprise 110 dans le manchon 131, pour éviter qu'il ne se désolidarise de l'élément de montage 130.

Il est par ailleurs prévu des moyens de retenue (non visibles sur les figures) qui permettent de retenir les fiches 91 dans le manchon 131, de telle sorte qu'elles soient facilement accessibles par l'usager.

Cette installation électrique 100 peut ainsi être utilisée de la manière suivante.

Initialement, en position rentrée, le bloc multiprise 110 est situé de telle manière que le couvercle 120 s'étend dans le plan de la couronne 132 de l'élément de montage 130. Dans cette position, les fiches 91 sont donc cachées par le couvercle 120.

Pour avoir accès aux prises de courant 112 du bloc multiprise 110 et aux fiches 91, l'usager exerce un appui sur une zone quelconque de la périphérie du couvercle 120, ce qui a pour effet de faire basculer ce dernier. L'usager peut alors saisir fermement le couvercle 120 par sa tranche et exercer une traction sur ce dernier afin d'extraire le bloc multiprise 110 jusqu'à sa position sortie.

Lorsque l'usager relâche le couvercle 120, le bloc multiprise 110 reste en position sortie grâce aux patins de l'élément de montage 130. L'usager peut alors facilement brancher le câble d'alimentation électrique de son ordinateur portable à l'une des prises de courant 112 du bloc multiprise 110 et il peut facilement saisir les fiches 91 pour les tirer jusqu'aux prises prévues sur son ordinateur portable.

Une fois cette opération effectuée, l'usager exerce un effort de pression sur le couvercle 120 pour faire coulisser le bloc multiprise 110 en position rentrée.

Dans le second mode de réalisation représenté sur les figures 6 et 7, l'appareillage électrique 210 comporte, outre le support d'appareillage 211 précédemment décrit :
- une prise de courant (non visible sur les figures) dont le socle est fixé à l'intérieur du boîtier 212 du support d'appareillage 211, et dont le puits de réception d'une fiche électrique est ouvert vers l'avant,
- une plaque de finition 215 fixée sur la couronne 214 du support d'appareillage 211 pour la recouvrir esthétiquement, et
- un couvercle 216 monté mobile à pivotement sur la plaque de finition 215 pour obturer ou découvrir à volonté le puits de la prise de courant.

Pour permettre le passage de la fiche 91 du câble électrique 90 vers l'avant de la paroi 300, la couronne 214 du support d'appareillage 211 comporte une encoche 217 en creux dans son bord périphérique extérieur.

La plaque de finition 215 est quant à elle épaisse et creuse, et elle présente sur sa tranche extérieure une ouverture 218 rectangulaire d'axe perpendiculaire à l'axe principal A2, pour permettre le passage de ce câble électrique 90 au-dessus de la paroi 300.

Telle que représentée sur les figures 6 et 7, cette ouverture 218 est bordée, du côté intérieur de la plaque de finition 215, par un canal 219 qui traverse l'encoche 217 prévue dans la couronne 214 du support d'appareillage 211 et qui permet de guider le câble électrique 90 en direction de l'enrouleur 1.

La présente invention n'est nullement limitée aux modes de réalisation décrits et représentés, mais l'homme du métier saura y apporter toute variante conforme à son esprit.

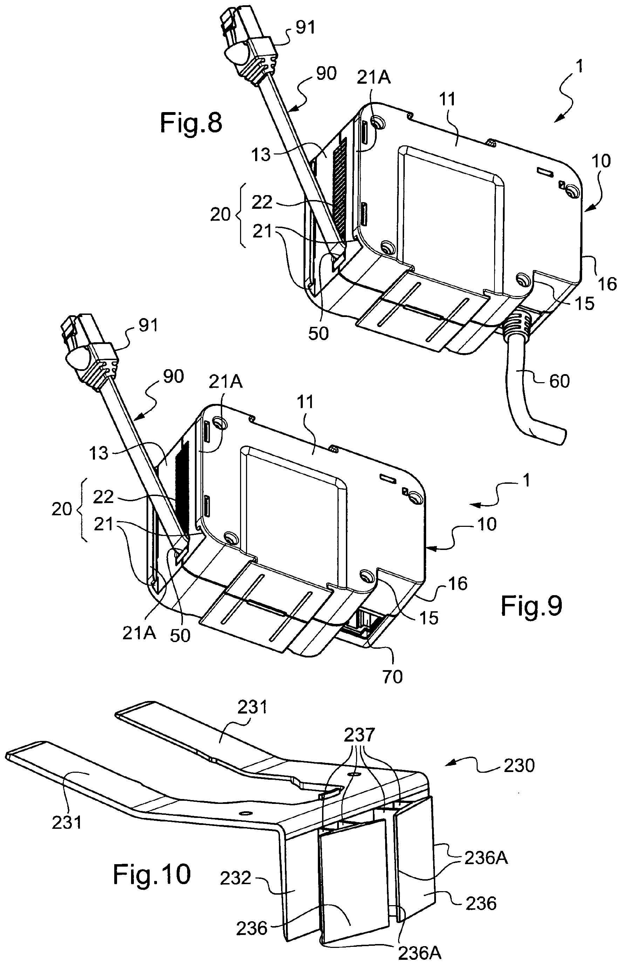

On a en particulier représenté sur les figures 8 et 9 deux variantes de réalisation de l'enrouleur 1.

Dans ces deux variantes, le boîtier 10 de l'enrouleur 1 est allongé du côté de sa face extérieure 15. Il présente ainsi une protubérance 16 qui permet de loger intérieurement des moyens de connexion du câble électrique 90 avec un câble électrique supplémentaire pouvant être branché à une prise murale.

Dans la variante représentée sur la figure 8, ce câble électrique supplémentaire 60 appartient à l'enrouleur 1. Une ouverture est alors pratiquée dans la protubérance 16, pour permettre à ce câble électrique supplémentaire 60 d'y entrer et de s'y fixer.

Dans la variante représentée sur la figure 9, ce câble électrique supplémentaire n'appartient pas à l'enrouleur 1. Les moyens de connexion logés dans la protubérance 16 comprennent alors une prise 70 (ici une prise RJ 45) qui est accessible à l'extérieur du boîtier par une ouverture pratiquée dans la protubérance 16.

Sur la figure 10, on a représenté une variante de réalisation de l'élément de montage 230 de l'installation électrique représentée sur les figures 6 et 7.

Dans cette variante, l'embase 232 est formée d'une simple plaque rectangulaire qui est repliée à angle droit vers l'arrière des deux branches 231.

Elle porte ici deux coulisseaux 236 identiques qui sont écartés l'un de l'autre et qui sont tournés dans des directions légèrement inclinées l'une par rapport à l'autre. De cette manière, cet élément de montage 230 est adapté à accueillir deux enrouleurs 1 dans des positions inclinées l'un par rapport à l'autre.

Ici, chaque coulisseau 236 est formé par une plaque rectangulaire qui est reliée à l'embase 232 par deux nervures longitudinales 237 et qui présente des dimensions telles que ses tranches longitudinales 236A sont adaptées à coulisser dans les rails délimités par les nervures 21A du boîtier 10 de l'enrouleur 1.

D'autres variantes de réalisation de l'invention, non représentées sur les figures, sont les suivantes.

Tel que décrit supra, le mécanisme de rangement de câble électrique est un enrouleur équipé de moyens d'enroulement automatique du câble électrique. En variante, ce dispositif pourrait être dépourvu de tels moyens d'enroulement automatique. Il pourrait par exemple comporter des moyens d'enroulement manuel du câble électrique. Il pourrait également ne comporter aucun moyen particulier à l'intérieur du boîtier, le rangement du câble étant alors réalisé en poussant le câble à l'intérieur du boîtier.

Par ailleurs, sur les figures, le socle du mécanisme de rangement de câble est formé par un boîtier fermé. En variante, il pourrait comporter un axe équipé de deux parois d'extrémité, autour duquel le câble électrique pourrait être enroulé. Dans cette variante, l'une des parois d'extrémité serait alors dotée de moyens d'accouplement aux éléments de montage 130 ; 230 des appareillages électriques 100 ; 200.

Encore en variante, le socle du mécanisme de rangement de câble pourrait être formé par un boîtier équipé intérieurement d'au moins une cloison, pour définir au moins deux logements d'accueil de deux câbles électriques distincts.

Dans les modes de réalisation représentés sur les figures, le câble électrique est un câble réseau équipé à ses extrémités de fiches réseau de type RJ 45. Ce type de câble électrique est donné à titre d'exemple, puisque le dispositif de rangement de câble pourrait également loger tout autre type de câble tel que des câbles USB, mini-USB, Firewire, HD15, jack...

La paroi dans laquelle est positionnée l'installation électrique est ici une table de bureau. Bien entendu, cette paroi pourrait en variante être formée par une cloison murale, un sol, ou encore un plan de travail d'une cuisine.

L'installation électrique comporte par ailleurs dans les deux modes de réalisation représentés sur les figures au moins une prise de courant. En variante, ces installations électriques pourraient être dépourvues de prise de courant et comporter par exemple un interrupteur, une prise de téléphone...

## Revendications

1. Installation électrique (100 ; 200) comportant :
- un appareillage électrique (110; 210) comprenant un moyen de raccordement (114) au réseau électrique local, et
- un élément de montage (130 ; 230) dudit appareillage électrique (110 ; 210) au travers d'une ouverture traversante (310) pratiquée dans une paroi (300), qui est tel que ledit appareillage électrique (110 ; 210) est accessible à l'utilisateur par l'avant de la paroi (300),
**caractérisée en ce qu'**elle comprend un ensemble de connexion électrique qui est distinct dudit appareillage électrique (110 ; 210) et qui comporte, d'une part, un câble électrique (90) dont une extrémité libre est équipée d'une fiche (91) et dont l'autre extrémité libre est équipée de moyens de connexion qui sont indépendants dudit appareillage électrique (110 ; 210) et dudit moyen de raccordement (114) et qui sont prévus pour être branchés à une prise murale distincte de l'appareillage électrique (110 ; 210), et, d'autre part, un dispositif de rangement (1) comportant un socle (10) qui loge des moyens d'enroulement automatique du câble électrique (90) et qui comprend des moyens d'accouplement (20) à des moyens d'accouplement (133 ; 233) complémentaires dudit élément de montage (130 ; 230), lesquels moyens d'accouplement (133 ; 233) complémentaires sont prévus pour être située à l'arrière de la paroi.

2. Installation électrique (100 ; 200) selon la revendication précédente, dans laquelle lesdits moyens d'accouplement (20) comportent des moyens de montage à coulissement (21) du socle (10) sur ledit élément de montage (130 ; 230) et des moyens de blocage (22) du coulissement.

3. Installation électrique (100 ; 200) selon la revendication 2, dans laquelle lesdits moyens de montage à coulissement (21) comportent deux nervures (21A) parallèles qui délimitent deux rails adaptés à coulisser sur un élément correspondant (134 ; 234) de l'élément de montage (130 ; 230).

4. Installation électrique (100) selon la revendication précédente, dans laquelle les moyens d'accouplement (133 ; 233) complémentaires comportent deux nervures (134A ; 234A) parallèles adaptées à coulisser entre les deux rails du dispositif de rangement (1).

5. Installation électrique (100 ; 200) selon l'une des revendications 2 à 4, dans laquelle lesdits moyens de blocage (22) sont des moyens d'encliquetage.

6. Installation électrique (100 ; 200) selon l'une des revendications 2 à 5, dans laquelle lesdits moyens de blocage (22) sont adaptés à bloquer le coulissement du socle (10) à au moins deux hauteurs différentes sur ledit élément de montage (130 ; 230).

7. Installation électrique (100 ; 200) selon les revendications 5 et 6, dans laquelle lesdits moyens de blocage (22) comportent une série de crans parallèles.

8. Installation électrique (100 ; 200) selon l'une des revendications précédentes, dans laquelle le socle (10) comporte des moyens d'assemblage (30) pour s'assembler à un socle (10') d'un autre dispositif de rangement (1') du même type.

9. Installation électrique (100 ; 200) selon l'une des revendications précédentes, dans laquelle le socle (10) est un boîtier fermé qui définit intérieurement ledit logement de réception du câble électrique (90) et qui présente deux ouvertures de sortie (40, 50) du câble électrique (90).

10. Installation électrique (100) selon l'une des revendications 1 à 9, dans laquelle ledit appareillage électrique (110) est monté mobile en translation sur ledit élément de montage (130) entre une position rentrée dans ledit élément de montage (130) et une position sortie vers l'avant dudit élément de montage (130).

11. Installation électrique (100) selon la revendication 10, dans laquelle ledit élément de montage (130) comporte un manchon (131) qui est engagé au travers de ladite ouverture traversante (310), qui est fixé à la paroi (300), et qui porte sur sa face externe lesdits moyens d'accouplement (133).

12. Installation électrique (200) selon l'une des revendications 1 à 9, dans laquelle ledit appareillage électrique (210) comporte un support d'appareillage (211) qui comprend un boîtier (212) engagé au travers de ladite ouverture traversante (310) et fixé à la paroi (300) par ledit élément de montage (230), et un mécanisme d'appareillage fixé dans ledit support d'appareillage (211).

13. Installation électrique (200) selon la revendication 12, dans laquelle ledit élément de montage (230) comporte un cavalier équipé, d'une part, de deux branches (231) qui forment des languettes souples et qui sont engagées dans des fentes (213) prévues sur la face externe du boîtier (212), et, d'autre part, une embase (232) qui porte lesdits moyens d'accouplement (233).

## Patentansprüche

1. Elektrische Einrichtung (100; 200) mit
- einer ein Mittel (114) zum Anschließen an das lokale Stromnetz aufweisenden elektrischen Vorrichtung (110; 210) und
- einem Element (130; 230) zum Montieren der elektrischen Vorrichtung (110; 210) durch eine in eine Wand (300) eingebrachte Durchgangsöffnung (310) hindurch, die so ausgelegt ist, daß die elektrische Vorrichtung (110; 210) für den Benutzer von der Vorderseite der Wand (300) aus zugänglich ist,
**dadurch gekennzeichnet, daß** sie einen von der elektrischen Vorrichtung (110; 210) getrennten Block für eine elektrische Verbindung aufweist, der einerseits ein elektrisches Kabel (90) aufweist, dessen eines freies Ende mit einem Stecker (91) versehen ist und dessen anderes freies Ende mit Verbindungsmitteln versehen ist, die von der elektrischen Vorrichtung (110; 210) und von den Anschlußmitteln (114) unabhängig sind und die dazu vorgesehen sind, in eine von der elektrischen Vorrichtung (110; 210) getrennte Wandsteckdose gesteckt zu werden, und andererseits eine Vorrichtung (1) zum Verstauen aufweist, die einen Sockel (10) aufweist, in dem Mittel zum automatischen Aufrollen des Kabels (90) untergebracht sind und der Mittel (20) zum Ankoppeln an komplementäre Ankopplungsmittel (133; 233) des Montageelements (130; 230) aufweist, wobei die Ankopplungsmittel (133; 233) dazu vorgesehen sind, sich an der Rückseite der Wand zu befinden.

2. Elektrische Einrichtung (100; 200) gemäß dem vorangehenden Anspruch, bei der die Ankopplungsmittel (20) Mittel (21) zum verschiebbaren Anbringen des Sockels (10) auf dem Montageelement (130; 230) und Mittel (22) zum Blockieren der Verschiebung aufweisen.

3. Elektrische Einrichtung (100; 200) gemäß Anspruch 2, bei der die Mittel (21) zum verschiebbaren Anbringen zwei parallele Rippen (21A) aufweisen, die zwei Schienen begrenzen, die dazu ausgelegt sind, auf einem entsprechenden Element (134; 234) des Montagelements (130; 230) verschoben zu werden.

4. Elektrische Einrichtung (100) gemäß einem der vorangehenden Ansprüche, bei der die komplementären Ankopplungsmittel (133; 233) zwei parallele Rippen (134A; 234A) aufweisen, die dazu ausgelegt sind, zwischen den beiden Schienen der Vorrichtung (1) verschoben zu werden.

5. Elektrische Einrichtung (100; 200) gemäß einem der Ansprüche 2 bis 4, bei der die Mittel zum Blockieren (22) Mittel zum Einrasten sind.

6. Elektrische Einrichtung (100; 200) gemäß einem der Ansprüche 2 bis 5, bei der die Mittel zum Blockieren (22) dazu ausgelegt sind, das Verschieben des Sockels (10) auf wenigstens zwei verschiedenen Höhen auf dem Montageelement (130; 230) zu blockieren.

7. Elektrische Einrichtung (100; 200) gemäß den Ansprüchen 5 und 6, bei der die Mittel zum Blockieren (22) eine Reihe paralleler Einkerbungen aufweisen.

8. Elektrische Einrichtung (100; 200) gemäß einem der vorangehenden Ansprüche, bei der der Sockel (10) Mittel (30) zum Zusammenfügen aufweist, um diesen mit einem Sockel (10') einer anderen Vorrichtung (1') zum Verstauen desselben Typs zusammenzufügen.

9. Elektrische Einrichtung (100; 200) gemäß einem der vorangehenden Ansprüche, bei der der Sockel (10) ein geschlossenes Gehäuse ist, das im Inneren den Aufnahmeraum für das elektrische Kabel (90) festlegt und das zwei Ausgangsöffnungen (40, 50) für das elektrische Kabel (90) aufweist.

10. Elektrische Einrichtung (100) gemäß einem der Ansprüche 1 bis 9, bei der die elektrische Vorrichtung (110) auf dem Montageelement (130) zwischen einer ins Montageelement (130) zurückgezogenen Position und einer aus dem Montagelement (130) nach vorne herausgetretenen Position translatorisch verschiebbar angebracht ist.

11. Elektrische Einrichtung (100) gemäß Anspruch 10, bei der das Montageelement (130) eine Hülse (131) aufweist, die durch die Durchgangsöffnung (310) hindurchreicht, die an der Wand (300) befestigt ist, und die auf ihrer Außenseite die Ankopplungsmittel (133) trägt.

12. Elektrische Einrichtung (200) gemäß einem der Ansprüche 1 bis 9, bei der die elektrische Vorrichtung (210) einen Vorrichtungsträger (211), der ein Gehäuse (212) aufweist, das durch die Durchgangsöffnung (310) hindurchreicht und an der Wand (300) mittels des Montageelements (230) befestigt ist, und einen in dem Vorrichtungsträger (211) befestigten Vorrichtungsmechanismus aufweist.

13. Elektrische Einrichtung (200) gemäß Anspruch 12, bei der das Montageelement (230) eine Halterung aufweist, die einerseits mit zwei Armen (231) versehen ist, die flexible Zungen bilden und die in auf der Außenseite des Gehäuses (212) vorgesehene Spalte (213) eingebracht sind, und die andererseits einen Sockel (232) aufweist, der die Ankopplungsmittel (233) trägt.

## Claims

1. An electrical installation (100; 200) comprising:
· an electrical accessory (110; 210) including power connection means (114) for connecting to the local electricity network; and
· a mounting element (130; 230) for mounting said electrical accessory (110; 210) through a through opening (310) formed in a wall (300), which mounting element is such that said electrical accessory (110; 210) is accessible to the user via the front of the wall (300);
the electrical installation being **characterized in that** it further comprises an electrical connection assembly that is distinct from said electrical accessory (110; 210) and that comprises firstly an electric cable (90) having a free end that is fitted with a plug (91) and having another free end that is fitted with connection means that are independent from said electrical accessory (110; 210) and from said power connection means (114) and that are designed to be coupled to a wall socket outlet that is distinct from the electrical accessory (110; 210), and secondly a storage device (1) comprising a base (10) that houses automatic winding means for winding in the electric cable (90), and that includes attachment means (20) for attaching to complementary attachment means (133; 233) of said mounting element (130; 230), which complementary attachment means (133; 233) are designed to be situated behind the wall.

2. An electrical installation (100; 200) according to the preceding claim, wherein said attachment means (20) comprise slidable-mounting means (21) for slidably mounting the base (10) on said mounting element (130; 230), and blocking means (22) for blocking such sliding.

3. An electrical installation (100; 200) according to claim 2, wherein said slidable-mounting means (21) comprise two parallel splines (21A) that define two rails that are adapted to slide over a corresponding element (134; 234) of the mounting element (130; 230).

4. An electrical installation (100) according to the preceding claim, wherein the complementary attachment means (133; 233) include two parallel splines (134A; 234A) that are adapted to slide between the two rails of the storage device (1).

5. An electrical installation (100; 200) according to any one of claims 2 to 4, wherein said blocking means (22) are snap-fastener means.

6. An electrical installation (100; 200) according to any one of claims 2 to 5, wherein said blocking means (22) are adapted to block the sliding of the base (10) at at least two different heights on said mounting element (130; 230).

7. An electrical installation (100; 200) according to claim 5 and claim 6, wherein said blocking means (22) comprise a series of parallel notches.

8. An electrical installation (100; 200) according to any preceding claim, wherein the base (10) includes assembly means (30) for assembling to a base (10') of another storage device (1') of the same type.

9. An electrical installation (100; 200) according to any preceding claim, wherein the base (10) is a closed casing that internally defines said reception housing for receiving the electric cable (90), and that presents two outlet openings (40, 50) for the electric cable (90).

10. An electrical installation (100) according to any one of claims 1 to 9, wherein said electrical accessory (110) is mounted to move in translation on said mounting element (130) between a retracted position in said mounting element (130) and an extended position towards the front of said mounting element (130).

11. An electrical installation (100) according to claim 10, wherein said mounting element (130) comprises a sleeve (131) that is engaged through said through opening (310), that is fastened to the wall (300), and that carries said attachment means (133) on its outside face.

12. An electrical installation (200) according to one of claims 1 to 9, wherein said electrical accessory (210) comprises: an accessory support (211) that comprises a casing (212) that is engaged through said through opening (310) and that is fastened to the wall (300) by said mounting element (230); and an accessory mechanism that is fastened in said accessory support (211).

13. An electrical installation (200) according to claim 12, wherein said mounting element (230) comprises a U-shaped strip that is provided firstly with two branches (231) that form flexible tongues and that are engaged in slots (213) that are provided in the outside face of the casing (212), and secondly with a base (232) that carries said attachment means (233).
